# EUROPÄISCHE PATENTSCHRIFT

(11) **EP 0 839 945 B1**
(45) Veröffentlichungstag und Bekanntmachung des Hinweises auf die Patenterteilung: **12.03.2003**
(21) Anmeldenummer: 97118828.9
(22) Anmeldetag: 29.10.1997
(51) Int. Cl.: D06F 39/04, D06F 95/00

(54) **Mobile Wäschereieinrichtung**
Mobile washing device for laundry
Dispositif de lavage mobile pour le linge

(30) Priorität: 29.10.1996 DE 19644924
(43) Veröffentlichungstag der Anmeldung: 06.05.1998
(73) Patentinhaber: Alfred Kärcher GmbH & Co., 71364 Winnenden (DE)
(72) Erfinder: Maier, Norbert, 71404 Korb (DE); Stelzmüller, Helmut, 71397 Leutenbach (DE)
(74) Vertreter: Hoeger, Stellrecht & Partner

(56) Entgegenhaltungen:
- CH-A- 121 316
- CH-A- 347 812
- DE-A- 4 225 847
- DE-C- 132 104
- FR-A- 493 327
- FR-A- 879 051
- FR-A- 1 218 218
- GB-A- 2 264 470
- JP-A- 9 142 195

## Beschreibung

Die Erfindung betrifft eine mobile Wäschereieinrichtung, die eine auf einem Fahrgestell angeordnete Waschmaschine mit einem Frischwasseranschluß, einem Abwasseranschluß und einem Elektromotor zum Antrieb der Wäschetrommel der Waschmaschine umfaßt sowie einen kraftstoffbetriebenen Brenner zum Beheizen der Waschmaschine.

Beispielsweise auf einem Lastkraftwagen oder einem Anhänger montierte Wäschereieinrichtungen kommen insbesondere im Katastrophenschutz oder in militärischen Bereichen zum Einsatz. Sie ermöglichen das Reinigen sämtlicher üblicher Wäschearten. Hierzu ist es erforderlich, die Wäschereieinrichtung mit Wasser und elektrischer Energie zu versorgen.

Aus den französischen Patentschriften FR 1 218 218 A und FR 879 051 A sind mobile Wäschereieinrichtungen bekannt, bei denen ein kraftstoffbetriebener Brenner zum Einsatz kommt, mit dessen Hilfe Dampf erzeugt werden kann. Der Dampf wird dann zum Reinigen der Wäsche der Waschmaschine zugeführt.

Aus der Schweizer Patentschrift CH 347 812 A ist eine stationäre Wäschereieinrichtung bekannt, bei der ein Flüssigkeitsgemisch mittels eines Wärmeerzeugers erwärmt und über einen offenen Flüssigkeitskreislauf dem Heizkörper einer Waschmaschine zugeführt werden kann. Der Heizkörper umgibt zumindest teilweise das in die Waschmaschine eingebrachte Gut, so daß dieses indirekt mit Hilfe des Flüssigkeitsgemisches als Wärmeübertragungsmedium erwärmt werden kann. Um zu vermeiden, daß beim Aufheizen des Flüssigkeitsgemisches stoßweise ausgetriebene Lufteinschlüsse zu einem Verlust von Wärmeübertragungsflüssigkeit führen, wird in der CH 347 812 A vorgeschlagen, in den Flüssigkeitskreislauf ein Ausdehnungsgefäß mit einem offenen Abzug einzusetzen, der über das Dach des jeweiligen Gebäudes hinausführt.

Eine stationäre Wäschereieinrichtung mit einem geschlossenen Flüssigkeitskreislauf und einer indirekten Beheizung einer Waschmaschine mit Hilfe von heißem Wasser ist aus der Schweizer Patentschrift CH 121 316 A bekannt. Das Wasser wird auf eine Temperatur von 100°C bis 150°C erwärmt. Hierzu muß im Flüssigkeitskreislauf ein Druck von 1 bar bis 4,8 bar vorliegen. Der Flüssigkeitskreislauf umfaßt ein Ausdehnungsgefäß mit einem Überlauf oder Abzug, wobei der Abzug über ein Sicherheitsventil gesichert ist.

Aufgabe der vorliegenden Erfindung ist es, eine mobile Wäschereieinrichtung der gattungsgemäßen Art derart auszubilden, daß sie einen besonders geringen Bedarf an elektrischer Energie aufweist.

Diese Aufgabe wird bei einer mobilen Wäschereieinrichtung der eingangs genannten Art erfindungsgemäß durch die Merkmale des Anspruches 1 gelöst.

Bei einer derartigen Ausgestaltung erfolgt die Beheizung der Waschmaschine indirekt über den kraftstoffbetriebenen Brenner. Dieser kann beispielsweise mit Dieselkraftstoff, mit Kerosin oder mit einem Gemisch dieser beiden Kraftstoffe betrieben werden. Lediglich zum Antrieb der Wäschetrommel der Waschmaschine ist elektrische Energie erforderlich, während der beträchtlich größere Energieanteil, der zum Erwärmen der Reinigungsflüssigkeit der Waschmaschine notwendig ist, vom kraftstoffbetriebenen Brenner zur Verfügung gestellt wird. Erfindungsgemäß ist vorgesehen, daß die im Flüssigkeitskreislauf zirkulierende Flüssigkeit unter einem Druck von etwa 2 bis 6 bar befüllt ist. Ein derartiger Überdruck ermöglicht es, die im Flüssigkeitskreislauf zirkulierende Flüssigkeit beispielsweise auf bis zu etwa 150° C zu erwärmen, wobei aufgrund des Überdruckes die flüssige Phase vollständig erhalten bleibt. Die beispielsweise auf 150° C erwärmte Flüssigkeit wird dem Wärmetauscher der Waschmaschine zugeführt. Bedingt durch den Überdruck der Flüssigkeit kann im Wärmetauscher eine sehr hohe Temperaturdifferenz erzielt werden, so daß die Beheizung der Waschmaschine einen hohen Wirkungsgrad aufweist. Die erfindungsgemäße mobile Wäschereieinrichtung zeichnet sich somit durch einen besonders geringen Bedarf an elektrischer Energie aus.

Um eine besonders zuverlässige Funktion der mobilen Wäschereieinrichtung zu gewährleisten, ist erfindungsgemäß vorgesehen, daß in den Flüssigkeitskreislauf eine Umwälzpumpe geschaltet ist.

Um sicherzustellen, daß die vom Brenner bereitgestellte Wärmeenergie zuverlässig an die Wärmetauscher der Waschmaschine übertragen wird, ist außerdem vorgesehen, daß in den Flüssigkeitskreislauf eine Strömungsmeßeinrichtung geschaltet ist. Mittels dieser Meßeinrichtung kann auf einfache Weise festgestellt werden, ob die Flüssigkeit tatsächlich im Flüssigkeitskreislauf zirkuliert und somit die im Brenner erzeugte Wärmeenergie zur Waschmaschine übertragen wird.

An den Flüssigkeitskreislauf ist eine Druck- und/oder Temperaturmeßeinrichtung angeschlossen, so daß jederzeit festgestellt werden kann, ob im Flüssigkeitskreislauf der zur Erzielung eines hohen Wirkungsgrades erforderliche Überdruck beziehungsweise die entsprechende hohe Temperatur der Flüssigkeit, beispielsweise ungefähr 150° C vorliegen.

Außerdem ist bei der erfindungsgemäßen mobilen Wäschereieinrichtung vorgesehen, daß diese mindestens eine den Betrieb des Brenners und der Umwälzpumpe steuernde Steuereinheit umfaßt. Mittels der Steuereinheit können in Abhängigkeit von einem Wärmeanforderungssignal der Waschmaschine der Brenner und die Umwälzpumpe aktiviert werden.

Die Steuereinheit steuert den Betrieb des Brenners und der Umwälzpumpe in Abhängigkeit von Überwachungssignalen der Druck- und/oder Temperatur- und/oder Strömungsmeßeinrichungen.

Besonders vorteilhaft ist es, wenn die im Flüssigkeitskreislauf zirkulierende Flüssigkeit ein Alkohol-Wasser-Gemisch ist. Dieses Gemisch dient als Wärmeübertragungsmedium, um vom Brenner die Wärmeenergie an den Wärmetauscher der Waschmaschine zu übertragen.

Günstig ist es, wenn die im Flüssigkeitskreislauf zirkulierende Flüssigkeit ein Ethylenglykol-Wasser-Gemisch ist. Es kann beispielsweise vorgesehen sein, daß das Gemisch ungefähr 45 Gew.% Ethylenglycol enthält.

Bei einer vorteilhaften Ausgestaltung ist vorgesehen, daß die mobile Wäschereieinrichtung einen mittels eines Wärmetauschers beheizbaren Wäschetrockner umfaßt, wobei der Wärmetauscher an den voranstehend erläuterten Flüssigkeitskreislauf angeschlossen ist. Mit Hilfe einer derartigen Ausführungsform kann die Wäsche gewaschen und anschließend getrocknet werden, wobei sowohl für das Waschen als auch für das Trocknen eine indirekte Beheizung über den kraftstoffbetriebenen Brenner und jeweils einen Wärmetauscher zum Einsatz kommt.

Günstig ist es, dem Wäschetrockner einen separaten Flüssigkeitskreislauf mit einer mittels eines kraftstoffbetriebenen Brenners beheizbaren Flüssigkeit zuzuordnen, so daß die Versorgung des Wäschetrockners mit Wärmeenergie unabhängig von der Wärmeenergieversorgung der Waschmaschine erfolgt. Aufgrund der indirekten Beheizung von Wäschetrockner und Waschmaschine wird der Bedarf an elektrischer Energie gering gehalten und trotzdem ist eine umfassende Reinigung aller üblicher Wäschearten möglich.

Die Waschmaschine und der Wäschetrockner können beispielsweise jeweils ein Fassungsvermögen von cirka 25 kg Trockenwäsche aufweisen. Sowohl das Waschprogramm als auch der Trocknungsvorgang können jeweils ungefähr eine Stunde andauern. Innerhalb relativ kurzer Zeit lassen sich somit bei einem geringen Bedarf an elektrischer Energie große Mengen an Wäsche reinigen.

Um die mobile Wäschereieinrichtung möglichst autark auszugestalten, ist bei einer bevorzugten Ausführungsform vorgesehen, daß sie eine elektrische Stromerzeugungseinheit umfaßt. Es kann beispielsweise vorgesehen sein, daß auf dem Fahrgestell eine Stromerzeugungseinheit mit einer Leistung von etwa 15 kVA montiert ist. Die Stromerzeugungseinheit kann ebenfalls mit Dieselkraftstoff oder mit Kerosin betrieben werden.

Alternativ oder als Ergänzung hierzu ist es günstig, wenn die mobile Wäschereieinrichtung an ein externes Stromnetz anschließbar ist. Ein derartiger Anschluß kann über eine Einspeisesteckdose erfolgen, wobei es zur Absicherung des elektrischen Versorgungssystems von Vorteil ist, wenn die mobile Wäschereieinrichtung einen Trenntransformator aufweist. Dieser kann beispielsweise in einem Schaltschrank angeordnet sein.

Wie bereits erwähnt, kann der kraftstoffbetriebene Brenner als Dieselbrenner ausgestaltet sein. Da die Beheizung der Waschmaschine und des Wäschetrockners indirekt über an geschlossene Flüssigkeitskreisläufe angeschlossene Wärmetauscher erfolgt, ist die Ausgestaltung des kraftstoffbetriebenen Brenners nicht an die baulichen Gegebenheiten der Waschmaschine bzw. des Wäschetrockners gebunden. Dies ermöglicht es, für die erfindungsgemäße mobile Wäschereieinrichtung einen Dieselbrenner zu verwenden, der auch für andere Einsatzzwecke geeignet ist und deshalb kostengünstig in großer Stückzahl herstellbar ist.

Außerdem ist es günstig, wenn an den Flüssigkeitskreislauf ein Ausdehnungsgefäß angeschlossen ist, durch das die Volumenänderung der im Flüssigkeitskreislauf zirkulierenden Flüssigkeit aufgrund ihrer Erwärmung in konstruktiv einfacher Weise berücksichtigt werden kann.

Es kann vorgesehen sein, daß sowohl der Waschmaschine als auch dem Wäschetrockner jeweils eine Steuereinheit zugeordnet ist. Das zu beheizende Gerät, also die Waschmaschine oder der Wäschetrockner, kann an die jeweilige Steuereinheit ein Wärmeanforderungssignal, beispielsweise ein 230 V Wechselspannungssignal, übertragen. Die Steuereinheit aktiviert dann bei dem entsprechenden Flüssigkeitskreislauf zunächst die Umwälzpumpe und nach einer Zeitverzögerung von beispielsweise ungefähr 10 Sekunden den kraftstoffbetriebenen Brenner einschließlich einem dazugehörigen Gebläse und einer Kraftstofförderpumpe. Der Brenner wird allerdings von der Steuereinheit nur dann aktiviert, wenn an der Steuereinheit ein Drucküberwachungssignal der Druckmeßeinrichtung anliegt, wonach im Flüssigkeitskreislauf ein Mindestdruck vorhanden ist. Zu diesem Zweck kann die Druckmeßeinrichtung als beispielsweise einpoliger Umschalter ausgestaltet sein, der bei Vorliegen eines Mindestdruckes aus einer ersten Schaltstellung in eine zweite Schaltstellung übergeht. Außerdem kann vorgesehen sein, daß die Steuereinheit den Brenner nur dann aktiviert, wenn an der Steuereinheit zusätzlich ein Temperaturüberwachungssignal anliegt, das der Steuereinheit von der Temperaturmeßeinrichtung dann übermittelt wird, wenn die Temperatur der im Flüssigkeitskreislauf zirkulierenden Flüssigkeit unterhalb eines Höchstwerts liegt. Auch die Temperaturmeßeinrichtung kann zu diesem Zweck als beispielsweise einpoliger Umschalter ausgestaltet sein. Schließlich kann durch die Steuereinheit sichergestellt werden, daß der Betrieb des Brenners nur dann aktiviert wird, wenn der Durchfluß der im Flüssigkeitskreislauf zirkulierenden Flüssigkeit durch die Strömungsmeßeinrichtung einen Mindestwert überschreitet. Auch die Strömungsmeßeinrichtung kann beispielsweise als einpoliger Umschalter ausgestaltet sein. Nach Aktivierung des Brenners durch die Steuereinheit bleibt dieser so lange in Betrieb, bis das Wärmeanforderungssignal des zu beheizenden Geräts abfällt oder aber die Temperaturmeßeinrichtung, die zu diesem Zweck einen zweiten einpoligen Umschalter umfassen kann, das Überschreiten der Temperatur der im Flüssigkeitskreislauf zirkulierenden Flüssigkeit über einen Höchstwert meldet.

Die Steuereinheit ist vorteilhafterweise derart ausgestaltet, daß bei Wegfall des Wärmeanforderungssignals des zu beheizenden Geräts zunächst der Brenner abgeschaltet wird, die Umwälzpumpe sowie das Gebläse des Brenners jedoch noch während einer Nachlaufzeit von beispielsweise 5 Minuten in Betrieb bleiben, um eine Überhitzung des Flüssigkeitskreislaufs zu verhindern.

Vorteilhafterweise ist der Flüssigkeitskreislauf zusätzlich mit einem Überdruckventil ausgestaltet, das beispielsweise bei einem Druck von ungefähr 9 bar öffnet.

Außerdem ist es günstig, wenn die mobile Wäschereieinrichtung einen Not-Aus-Taster aufweist, bei dessen Betätigung die Waschmaschine und der Wäschetrockner sowie der Brenner sofort abgeschaltet werden.

Um die Funktion des kraftstoffbetriebenen Brenners überwachen zu können, ist es von Vorteil, wenn dieser eine Flammüberwachung aufweist.

Bei einer besonders bevorzugten Ausgestaltung ist vorgesehen, daß die mobile Wäschereieinrichtung modulartig aufgebaut ist. So können beispielsweise separat ausgebildete, auswechselbare Baugruppen vorgesehen sein zum Waschen und/oder Trocknen der Wäsche, zum Erwärmen der im Flüssigkeitskreislauf zirkulierenden Flüssigkeit, zur Stromversorgung und zum Steuern sämtlicher Funktionsgeräte. Die einzelnen Baugruppen oder Module können bei Bedarf auf einfache Weise ausgetauscht werden, so daß im Falle eines Defekts die Einsatzbereitschaft der mobilen Wäschereieinrichtung innerhalb kurzer Zeit wiederhergestellt werden kann.

Außerdem können aufgrund der indirekten Heizung der Waschmaschine und des Wäschetrockners Baugruppen zum Einsatz kommen, die auch für andere Zwecke verwendet werden und dadurch in großer Stückzahl hergestellt werden können. Der modulartige Aufbau der erfindungsgemäßen mobilen Wäschereieinrichtung ermöglicht somit eine besonders kostengünstige Herstellung und eine besonders einfache Handhabung.

Die nachfolgende Beschreibung einer bevorzugten Ausführungsform der Erfindung dient im Zusammenhang mit der Zeichnung der näheren Erläuterung. Es zeigen:
- Figur 1:: eine schematische Draufsicht auf eine erfindungsgemäße mobile Wäschereieinrichtung und
- Figur 2:: ein Blockschaltbild der bei der mobilen Wäschereieinrichtung aus Figur 1 zum Einsatz kommenden Warmwasserheizung am Beispiel einer Waschmaschine.

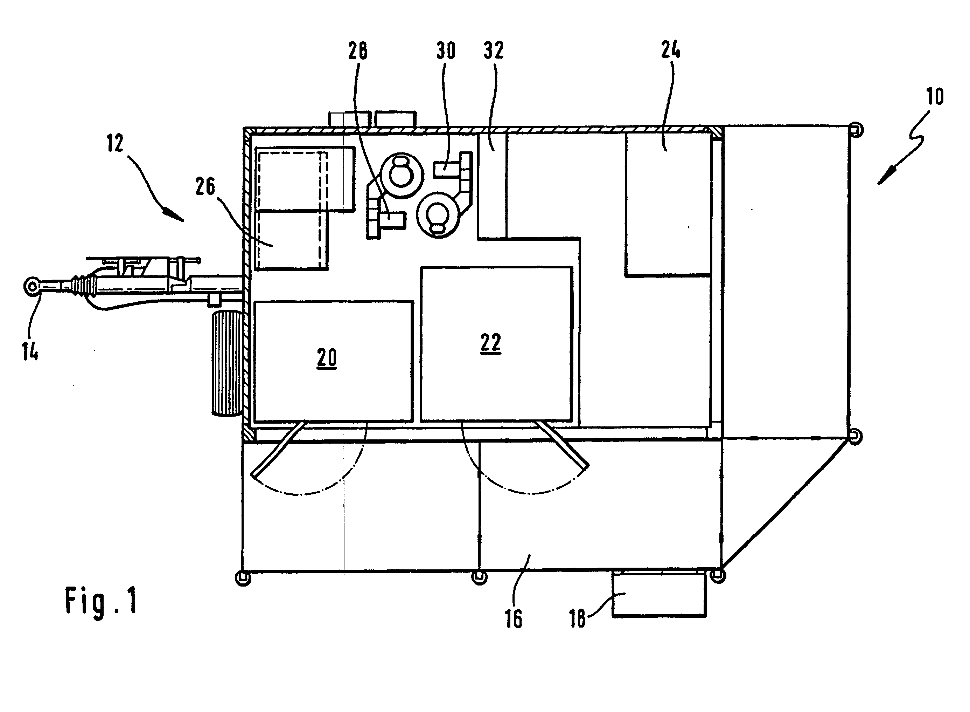

In Figur 1 ist eine insgesamt mit dem Bezugszeichen 10 belegte mobile Wäschereieinrichtung dargestellt. Diese umfaßt einen Anhänger 12, der mittels einer Zugdeichsel 14 an einen Lastkraftwagen ankuppelbar ist. Der Anhänger 12 ist auf einer Längsseite und auf seiner Rückseite mit einer abklappbaren und begehbaren Bordwand ausgestattet, die einen Laufsteg 16 ausbildet. Dieser ist über eine Treppe 18 zugänglich.

Die einzelnen Baugruppen der mobilen Wäschereieinrichtung 10 sind auf der Ladefläche des Anhängers 12 angeordnet. An einer Längsseite des Anhängers 12 sind ein Wäschetrockner 20 und eine Waschmaschine 22 positioniert, die vom Laufsteg 16 aus bedient werden können und unmittelbar nebeneinander stehen. An der Rückseite des Anhängers 12 befindet sich eine elektrischer Schaltschrank 24 mit Bedien- und Anzeigeelemente für den Betrieb der mobilen Wäschereieinrichtung 10, und auf der dem Wäschetrockner 20 und der Waschmaschine 22 gegenüberliegenden Längsseite des Anhängers 12 sind ein Stromerzeuger 26, zwei Dieselbrenner 28 und 30 sowie ein Tank 32 für den erforderlichen Dieselkraftstoff angeordnet.

Die gesamte mobile Wäschereieinrichtung 10 kann somit im Gelände bewegt werden und ist für den Transport mit Lkw, Bahn und Flugzeug konzipiert.

Sowohl als Wäschetrockner 20 als auch als Waschmaschine 22 können Standardgeräte mit Wärmetauschern eingesetzt werden. Auch für die Dieselbrenner 28 und 30 können Ausgestaltungen zum Einsatz kommen, wie sie beispielsweise bei beheizbaren Hochdruckreinigungsgeräten verwendet werden. Der Einsatz derartiger kostengünstig herstellbarer Standardgeräte ist deshalb möglich, da der Wäschetrockner 20 und die Waschmaschine 22 indirekt beheizt werden mit Hilfe jeweils eines Flüssigkeitskreislaufs, über den die vom Dieselbrenner 28 bzw. 30 erzeugte Wärmeenergie an die Waschmaschine 22 bzw. den Wäschetrockner 20 übertragen werden.

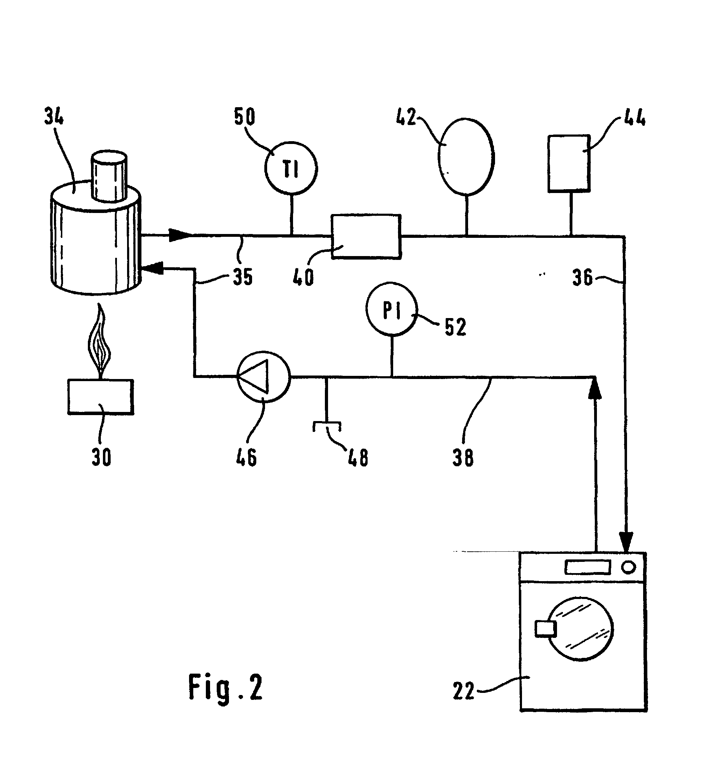

Die Wärmeversorgung der Waschmaschine 22 ist in Figur 2 schematisch dargestellt. Dem Dieselbrenner 30 ist ein Heizkessel 34 zugeordnet, in dem ein Gemisch von 45 Gew.% Ethylenglycol und Wasser erwärmt wird. Dieses Flüssigkeitsgemisch zirkuliert in einem Flüssigkeitskreislauf 35, der eine Zufuhrleitung 36 und eine Rückführleitung 38 umfaßt, über die der Heizkessel 34 jeweils mit einem in die Waschmaschine 22 integrierten Wärmetauscher verbunden ist. Der Wärmetauscher der Waschmaschine 22 ist an sich bekannt und in der Zeichnung nicht dargestellt. In die Zufuhrleitung 36 des Flüssigkeitskreislaufs 35 ist ein Strömungswächter 40 geschaltet, und außerdem sind an die Zufuhrleitung 36 ein Druckausgleichsbehälter 42 sowie ein Sicherheitsglied 44 angeschlossen, das ein Manometer, ein Überdruckventil und einen Entlüfter umfaßt.

In die Rückführleitung 38 des Flüssigkeitskreislaufs 35 ist eine Umwälzpumpe 46 geschaltet, unter deren Wirkung das Ethylenglycol-Wasser-Gemisch im Flüssigkeitskreislauf 35 zirkuliert. Außerdem mündet in die Rückführleitung 38 ein Befüllanschluß 48, mit dessen Hilfe Flüssigkeit in den Flüssigkeitskreislauf 35 eingefüllt werden kann.

Zur Überwachung von Druck und Temperatur der im Flüssigkeitskreislauf zirkulierenden Flüssigkeit ist in der Zufuhrleitung 36 ein Temperatursensor 50 und in der Rückführleitung 38 ein Drucksensor 52 vorgesehen.

Der Flüssigkeitskreislauf 35 ist bei einem Druck von 4 bar mit dem Ethylenglycol-Wasser-Gemisch befüllt. Die Steuerung des in Figur 2 dargestellten Heizsystems für die Waschmaschine 22 erfolgt mittels einer in der Zeichnung nicht dargestellten Steuereinheit, die mittels elektrischer Verbindungen sowohl an die Waschmaschine 22 als auch an den Brenner 30, die Umwälzpumpe 46 sowie den Strömungswächter 40, den Temperatursensor 50 und den Drucksensor 52 angeschlossen ist. Erhält die Steuereinheit von der Waschmaschine 22 ein Wärmeanforderungssignal, so schaltet sie die Umwälzpumpe 46 ein. Nach einer Zeitverzögerung von ungefähr 10 Sekunden wird der Brenner 30 aktiviert zusammen mit einem in der Zeichnung nicht dargestellten, an sich bekannten Gebläse und einer ebenfalls bekannten und nicht dargestellten Kraftstofförderpumpe. Die Aktivierung des Brenners erfolgt allerdings nur dann, wenn im Flüssigkeitskreislauf 35 ein Mindestdruck vorliegt, dies wird vom Drucksensor 52 bestätigt. Außerdem stellt die Steuereinheit sicher, daß der Brenner nur dann eingeschaltet wird, wenn vom Strömungswächter 40°ein Mindestwert bestätigt wird und wenn die Temperatur des Ethylenglycol-Wasser-Gemischs einen Wert unterhalb einer Höchsttemperatur aufweist. Auf diese Weise wird sichergestellt, daß die Zulauftemperatur zum Wärmetauscher der Waschmaschine 22 einen Wert von ungefähr 145° C ± 5° C aufweist.

Der Brenner 30 und die Umwälzpumpe 46 bleiben anschließend so lange aktiviert bis das Wärmeanforderungssignal der Waschmaschine 22 abfällt. Anschließend wird über die in der Zeichnung nicht dargestellte Steuereinheit der Brenner 30 abgeschaltet. Um eine Überhitzung des Heizsystems zu verhindern, wird über ein Zeitrelais sichergestellt, daß die Umwälzpumpe 46 sowie das in der Zeichnung nicht sichtbare Gebläse des Brenners 30 noch 5 Minuten aktiviert bleiben.

Das Heizsystem und die entsprechende Steuerung des Wäschetrockners 20 sind identisch wie das entsprechende System der Waschmaschine 22 ausgebildet und deshalb in der Zeichnung nicht dargestellt.

Durch die indirekte Beheizung von Wäschetrockner 20 und Waschmaschine 22 ergibt sich eine mobile Wäschereieinrichtung, die nur einen sehr geringen Bedarf an elektrischer Energie aufweist. Da der Flüssigkeitskreislauf 35 mit einem Überdruck betrieben wird, kann die im Flüssigkeitskreislauf 35 zirkulierende Flüssigkeit unter Beibehaltung ihrer flüssigen Phase auf ungefähr 150° C erwärmt werden. Dies hat zur Folge, daß in den Wärmetauschern des Wäschetrockners 20 und der Waschmaschine 22 eine große Temperaturdifferenz vorliegt, so daß die Beheizung der beiden Geräte mit einem hohen Wirkungsgrad erfolgen kann.

## Patentansprüche

1. Mobile Wäschereieinrichtung, die eine auf einem Fahrgestell angeordnete Waschmaschine (22) mit einem Frischwasseranschluß, einem Abwasseranschluß und einem Elektromotor zum Antrieb der Wäschetrommel der Waschmaschine (22) umfaßt sowie einen kraftstoffbetriebenen Brenner (30) zum Beheizen der Waschmaschine, **dadurch gekennzeichnet, daß** die Waschmaschine (22) zum Beheizen einen Wärmetauscher aufweist, und daß die mobile Wäschereieinrichtung (10) einen geschlossenen Flüssigkeitskreislauf (35) umfaßt, in den eine Umwälzpumpe (46) geschaltet ist und der unter einem Druck von etwa 2 bis 6 bar befüllt ist, wobei der Wärmetauscher an den Flüssigkeitskreislauf (35) angeschlossen ist und wobei die im Flüssigkeitskreislauf (35) zirkulierende Flüssigkeit vom kraftstoffbetriebenen Brenner (30) beheizbar ist und in den Flüssigkeitskreislauf (35) eine Strömungsmeßeinrichtung (40) geschaltet und an den Flüssigkeitskreislauf (35) eine Druck- und/oder Temperaturmeßeinrichtung (52 bzw. 50) angeschlossen ist, und daß die Wäschereieinrichtung mindestens eine den Betrieb des Brenners (30) und der Umwälzpumpe (46) steuernde Steuereinheit umfaßt, die den Betrieb des Brenners (30) und der Umwälzpumpe (46) in Abhängigkeit von Überwachungssignalen der Druck- und/oder Temperaturund/oder Strömungsmeßeinrichtung (52 bzw. 50 bzw. 40) steuert.

2. Wäschereieinrichtung nach Anspruch 1, **dadurch gekennzeichnet, daß** die im Flüssigkeitskreislauf (35) zirkulierende Flüssigkeit ein Alkohol-Wasser-Gemisch ist.

3. Wäschereieinrichtung nach Anspruch 1 oder 2, **dadurch gekennzeichnet, daß** die im Flüssigkeitskreislauf (35) zirkulierende Flüssigkeit ein Ethylenglycol-Wasser-Gemisch ist.

4. Wäschereieinrichtung nach Anspruch 3, **dadurch gekennzeichnet, daß** das Gemisch ungefähr 45 Gew.% Ethylenglycol umfaßt.

5. Wäschereieinrichtung nach einem der voranstehenden Ansprüche, **dadurch gekennzeichnet, daß** die Wäschereieinrichtung einen mittels eines Wärmetauschers beheizbaren Wäschetrockner (20) umfaßt, wobei der Wärmetauscher an den Flüssigkeitskreislauf (35) angeschlossen ist.

6. Wäschereieinrichtung nach einem der Ansprüche 1 bis 4, **dadurch gekennzeichnet, daß** die Wäschereieinrichtung einen mittels eines Wärmetauschers beheizbaren Wäschetrockner umfaßt, wobei der Wärmetauscher an einen separaten Flüssigkeitskreislauf mit einer mittels eines kraftstoffbetriebenen Brenners beheizbaren Flüssigkeit angeschlossen ist.

7. Wäschereieinrichtung nach einem der voranstehenden Ansprüche, **dadurch gekennzeichnet, daß** die Wäschereieinrichtung eine elektrische Stromerzeugungseinheit (26) umfaßt.

8. Wäschereieinrichtung nach einem der voranstehenden Ansprüche, **dadurch gekennzeichnet, daß** die Wäschereieinrichtung an ein externes Stromnetz anschließbar ist.

9. Wäschereieinrichtung nach Anspruch 8, **dadurch gekennzeichnet, daß** die Wäschereieinrichtung einen Trenntransformator aufweist.

10. Wäschereieinrichtung nach einem der voranstehenden Ansprüche, **dadurch gekennzeichnet, daß** der kraftstoffbetriebene Brenner als Dieselbrenner (30) ausgestaltet ist.

11. Wäschereieinrichtung nach einem der voranstehenden Ansprüche, **dadurch gekennzeichnet, daß** an den Flüssigkeitskreislauf (35) ein Ausdehnungsgefäß (42) angeschlossen ist.

12. Wäschereieinrichtung nach einem der voranstehenden Ansprüche, **dadurch gekennzeichnet, daß** die mindestens eine Steuereinheit (30) die Umwälzpumpe (46) in Abhängigkeit von einem Wärmeanforderungssignal der Waschmaschine (22) oder des Wäschetrockners (20) aktiviert.

13. Wäschereieinrichtung nach einem der voranstehenden Ansprüche, **dadurch gekennzeichnet, daß** die Wäschereieinrichtung modulartig aufgebaut ist.

14. Wäschereieinrichtung nach Anspruch 13, **dadurch gekennzeichnet, daß** die Wäschereieinrichtung separat ausgebildete, auswechselbare Baugruppen(20, 22; 28, 30; 26) zum Waschen und/oder Trocknen von Wäsche, zum Erwärmen der im Flüssigkeitskreislauf (35) zirkulierenden Flüssigkeit, zur Stromversorgung und zum Steuern der Funktionsgeräte umfaßt.

## Claims

1. Mobile laundry apparatus comprising a washing machine (22) which is arranged on a wheel frame and which has a fresh water connection, a waste water connection and an electric motor to drive the drum of the washing machine (22), and also comprising a fuel-operated burner (30) to heat the washing machine, **characterised in that** the washing machine (22) has a heat exchanger for heating, and **in that** the mobile laundry apparatus (10) comprises a closed fluid circuit (35) into which a circulation pump (46) is connected and which is filled under a pressure of approximately 2 to 6 bar, the heat exchanger being connected to the fluid circuit (35) and the fluid circulating in the fluid circuit (35) being heatable by the fuel-operated burner (30) and a flow-measuring device (40) being connected into the fluid circuit (35) and a pressure and/or temperature measuring device (52 and 50 respectively) being connected to the fluid circuit (35), and **in that** the laundry apparatus comprises at least one control unit which controls the operation of the burner (30) and the circulation pump (46) and which controls the operation of the burner (30) and the circulation pump (46) as a function of monitoring signals from the pressure and/or temperature and/or flow measuring device (52, 50 and 40 respectively).

2. Laundry apparatus according to claim 1, **characterised in that** the fluid circulating in the fluid circuit (35) is an alcohol and water mixture.

3. Laundry apparatus according to claim 1 or 2, **characterised in that** the fluid circulating in the fluid circuit (35) is an ethylene glycol and water mixture.

4. Laundry apparatus according to claim 3, **characterised in that** the mixture contains approximately 45% by weight of ethylene glycol.

5. Laundry apparatus according to any one of the preceding claims, **characterised in that** the laundry apparatus includes a laundry dryer (20) heatable by means of a heat exchanger, the heat exchanger being connected to the fluid circuit (35).

6. Laundry apparatus according to any one of claims 1 to 4, **characterised in that** the laundry apparatus includes a laundry dryer heatable by means of a heat exchanger, the heat exchanger being connected to a separate fluid circuit with a fluid heatable by means of a fuel-operated burner.

7. Laundry apparatus according to any one of the preceding claims, **characterised in that** the laundry apparatus includes an electric current-generating unit (26).

8. Laundry apparatus according to any one of the preceding claims, **characterised in that** the laundry apparatus is connectable to an external current network.

9. Laundry apparatus according to claim 8, **characterised in that** the laundry apparatus has an isolating transformer.

10. Laundry apparatus according to any one of the preceding claims, **characterised in that** the fuel-operated burner is in the form of a diesel burner (30).

11. Laundry apparatus according to any one of the preceding claims, **characterised in that** an expansion vessel (42) is connected to the fluid circuit (35).

12. Laundry apparatus according to any one of the preceding claims, **characterised in that** the at least one control unit (30) activates the circulation pump (46) as a function of a heat requirement signal of the washing machine (22) or the washing dryer (20).

13. Laundry apparatus according to any one of the preceding claims, **characterised in that** the laundry apparatus is modular.

14. Laundry apparatus according to claim 13, **characterised in that** the laundry apparatus comprises separate exchangeable structural components (20, 22; 28, 30; 26) for the washing and/or drying of laundry, for heating the fluid circulating in the fluid circuit (35), for current supply and for controlling the functional equipment.

## Revendications

1. , Appareil de buanderie mobile qui comporte une machine à laver (22) agencée sur un châssis et comportant un raccord d'eau propre, un raccord d'eau usée et un moteur électrique destiné à entraîner le tambour de lavage de la machine à laver (22) ainsi qu'un brûleur à carburant (30) destiné à chauffer la machine à laver, **caractérisé en ce que** la machine à laver (22) comporte un échangeur de chaleur destiné au chauffage, et **en ce que** l'appareil de buanderie mobile (10) comporte un circuit de liquide fermé dans lequel est monté une pompe de recirculation (46) et qui est rempli à une pression comprise entre 2 et 6 bars environ, l'échangeur de chaleur étant raccordé au circuit de liquide (35) et le liquide circulant dans le circuit de liquide (35) peut être chauffé par le brûleur à carburant (30) et un dispositif de mesure de débit (40) étant monté dans le circuit de liquide (35) et un dispositif de mesure de pression et/ou de température (52, respectivement 50) est raccordé au circuit de liquide (35), et **en ce que** l'appareil de buanderie comporte au moins une unité de commande, commandant le fonctionnement du brûleur (30) et de la pompe de recirculation (46) en fonction de signaux de surveillance du dispositif de mesure de pression et/ou de température et/ou de débit (52, respectivement 50, respectivement 40).

2. Appareil de buanderie selon la revendication 1, **caractérisé en ce que** le liquide circulant dans le circuit de liquide (35) est un mélange d'eau et d'alcool.

3. Appareil de buanderie selon la revendication 1 ou 2, **caractérisé en ce que** le liquide circulant dans le circuit de liquide (35) est une mélange d'eau et d'éthylène-glycol.

4. Appareil de buanderie selon la revendication 4, **caractérisé en ce que** le mélange comporte environ 45% en poids d'éthylène-glycol.

5. Appareil de buanderie selon l'une des revendications précédentes, **caractérisé en ce que** l'appareil de buanderie comporte un séchoir de linge (20) pouvant être chauffé au moyen d'un échangeur de chaleur, l'échangeur de chaleur étant raccordé au circuit de liquide (35).

6. Appareil de buanderie selon l'une des revendications 1 à 4, **caractérisé en ce que** l'appareil de buanderie comporte un séchoir à linge pouvant être chauffé au moyen d'un échangeur de chaleur, l'échangeur de chaleur étant raccordé à un circuit de liquide distinct comportant un liquide pouvant être chauffé au moyen d'un brûleur à carburant.

7. Appareil de buanderie selon l'une des revendications précédentes, **caractérisé en ce que** l'appareil de buanderie comporte une unité de génération de courant électrique (46).

8. Appareil de buanderie selon l'une des revendications précédente, **caractérisé en ce que** l'appareil de buanderie peut être raccordé à un réseau d'alimentation extérieur.

9. Appareil de buanderie selon la revendication 8, **caractérisé en ce que** l'appareil de buanderie comporte un transformateur d'isolation.

10. Appareil de buanderie selon l'une des revendications précédentes, **caractérisé en ce que** le brûleur à carburant est conformé en brûleur diesel (30).

11. Appareil de buanderie selon l'une des revendications précédentes, **caractérisé en ce qu'**un vase d'expansion (42) est raccordé au circuit de liquide (35).

12. Appareil de buanderie selon l'une des revendications précédentes, **caractérisé en ce que** l'au moins une unité de commande (30) active la pompe de recirculation (46) en fonction d'un signal de demande de chaleur de la machine à laver (22) ou du séchoir à linge (20).

13. Appareil de buanderie selon l'une des revendications précédentes, **caractérisé en ce que** l'appareil de buanderie a une structure modulaire.

14. Appareil de buanderie selon la revendication 13, **caractérisé en ce que** l'appareil de buanderie comporte des modules (20, 22 ; 28, 30 ; 26) échangeables et conformés séparément en vue de laver et/ou de sécher du linge, de chauffer le liquide circulant dans le circuit de liquide (35), d'alimenter en courant et de commander les appareils fonctionnels.
